# EUROPÄISCHE PATENTANMELDUNG

(11) **EP 1 655 245 A1**
(43) Veröffentlichungstag der Anmeldung: **10.05.2006**
(21) Anmeldenummer: 04450207.8
(22) Anmeldetag: 08.11.2004
(51) Int. Cl.: B65G 21/14, B28C 5/42

(54) **Bandförderer für ein Fahrzeug**

(71) Anmelder: Ruttnigg, Johann, 4661 Roitham (AT)
(72) Erfinder: Ruttnigg, Johann, 4661 Roitham (AT)
(74) Vertreter: Hübscher, Helmut

(57) **Zusammenfassung**

Es wir ein Bandförderer (1) für ein Fahrzeug mit einem Tragarm (4), der Führungsrollen (11, 12) für ein um endseitige Umlenkrollen (13, 14) umlaufendes Förderband (5) aufweist und durch wenigstens zwei Gelenke (2) mit zu den Umlenkrollen (13, 14) parallelen Achsen in gegeneinander durch Schwenkantriebe (21) verschwenkbare Abschnitte unterteilt ist, von denen einer zur Längenänderung aus zwei gegeneinander axial verschiebbaren Teilen (17, 18) besteht, mit einem einer Umlenkrolle (13) an einem Ende des Bandförderers (1) zugeordneten Bandantrieb (15) und mit einer Spanneinrichtung für das Förderband (5), beschrieben. Um vorteilhafte Konstruktionsbedingungen zu schaffen, wird vorgeschlagen, daß der Bandantrieb (15) der Umlenkrolle (13) am fahrzeugseitigen Aufgabeende des Bandförderers (1) zugeordnet ist und daß die beiden mit einer Federkraft im Sinne eines Auseinanderschiebens beaufschlagten Teile (17, 18) des in seiner Länge veränderbaren Tragarmabschnittes (16) die Spanneinrichtung bilden.

## Beschreibung

Die Erfindung bezieht sich auf einen Bandförderer für ein Fahrzeug mit einem Tragarm, der Führungsrollen für ein um endseitige Umlenkrollen umlaufendes Förderband aufweist und durch wenigstens zwei Gelenke mit zu den Umlenkrollen parallelen Achsen in gegeneinander durch Schwenkantriebe verschwenkbare Abschnitte unterteilt ist, von denen einer zur Längenänderung aus zwei gegeneinander axial verschiebbaren Teilen besteht, mit einem einer Umlenkrolle an einem Ende des Bandförderers zugeordneten Bandantrieb und mit einer Spanneinrichtung für das Förderband.

Um Schüttgut von einem Fahrzeug, beispielsweise Beton aus einer Mischtrommel, zu einer Stelle fördern zu können, die sich in einem beschränkten Abstand vom Fahrzeug befindet, ist es bekannt (AT 408 530 B) dem Fahrzeug einen Bandförderer zuzuordnen, der einen in einem Gestell um eine horizontale Achse schwenkbar gelagerten Tragarm für ein auf Führungsrollen abgestütztes, an den Aufgabe- und Abwurfenden um Umlenkrollen geführtes Förderband aufweist. Dieser Tragarm ist gelenkig unterteilt und kann mit Hilfe des um eine vertikale Achse schwenkbar gelagerten Gestells aus einer vom Fahrzeug weggeschwenkten Arbeitsstellung in eine gegen das Fahrzeug eingeschwenkte Ruhestellung verlagert werden, in der die durch die gelenkige Tragarmunterteilung gebildeten Tragarmabschnitte so gegeneinander verschwenkt sind, daß der Bandförderer im wesentlichen innerhalb des Fahrzeugumrisses zu liegen kommt. Zum Antrieb des Förderbandes, auf das das Schüttgut im allgemeinen über eine Schurre aufgegeben wird, dient ein Hydraulikmotor, der innerhalb der Umlenkrolle am Abwurfende des Bandförderers angeordnet wird, um die Zugbelastung des Förderbandes durch das zu fördernde Schüttgut für die Mitnahme des Förderbandes durch die angetriebene Umlenkrolle ausnützen zu können. Der am Abwurfende des Bandförderers vorgesehene Bandantrieb stellt allerdings eine zusätzliche Belastung dar, die bei der Auslegung des Tragarmes berücksichtigt werden muß. Außerdem sind die Versorgungsleitungen für den Bandantrieb entlang des gelenkig unterteilten Tragarmes zu verlegen.

Um die Länge des Bandförderers an den jeweiligen Abstand des Fahrzeuges von der mit dem Schüttgut zu beliefernden Stelle anpassen zu können, ist es darüber hinaus bekannt (EP 654 427 B1), zumindest den abwurfseitigen Tragarmabschnitt aus zwei gegeneinander axial verschiebbaren Teilen zusammenzusetzen, so daß die axiale Länge dieses Tragarmabschnittes teleskopartig eingestellt werden kann. Das Förderband bildet dabei zwischen den beiden Teilen des abwurfseitigen Tragarmabschnittes eine durch zusätzliche Umlenkrollen gebildete Vorratsschlaufe zum notwendigen Längenausgleich. Die Spannung des Förderbandes wird zusätzlich durch eine Spanneinrichtung konstant gehalten. Mit dieser Einstellbarkeit der Förderstrecke wird einerseits ein erheblicher Konstruktionsaufwand in Kauf genommen und anderseits die Gewichtsbelastung des Tragarmes im Bereich des Abwurfendes erheblich vergrößert, was wegen der vergleichsweise langen Hebelarme bezüglich der Anlenkung des Bandförderers am Fahrzeug zwangsläufig zu einer schweren Konstruktion führt. Gleiches gilt für eine andere bekannte Konstruktion (EP 0 427 673 A1), bei der mehrere teleskopartig ausziehbare, gegeneinander verschwenkbare Abschnitte eines Tragarmes für ein Förderband vorgesehen sind, das zwischen den ausziehbaren Teilen der Tragarmabschnitte jeweils zum Längenausgleich S-förmig um zusätzliche Umlenkrollen geführt werden muß. Auch bei dieser Konstruktion wird eine zusätzliche Spanneinrichtung am fahrzeugseitigen Ende mit einer Spannrolle erforderlich, um die eine Bandschlaufe geführt wird. Diese Spanneinrichtung macht zwar die Verlegung des Bandantriebes vom abwurfseitigen Ende zum fahrzeugseitigen Aufgabeende des Bandförderers möglich, doch ergeben sich dadurch aufgrund der ausziehbaren Tragarmabschnitte kaum ins Gewicht fallende Konstruktionsvereinfachungen. Insbesondere werden dadurch die Abwurfbedingungen nicht beeinflußt.

Schließlich ist es bei einem Becherförderer bekannt (FR 2 545 068 A1), das Traggestell für die die Becher aufnehmenden, um Umlenkrollen geführten Ketten in zwei Abschnitte zu unterteilen und diese Abschnitte um eine zu den Umlenkrollen senkrechte Achse aus einer gestreckten Arbeitsstellung in eine eingeschwenkte Transportstellung zu verlagern. Zur Spannung der Ketten ist eine der Umlenkrollen verschiebbar im verschwenkbaren Abschnitt des Traggestells gelagert und durch eine Feder beaufschlagt. Abgesehen davon, daß nur eine Arbeitsstellung mit einer unveränderbaren Förderstrecke vorliegt, schließt der Einsatz eines Förderbandes eine gegenseitige Verschwenkung von Trägerabschnitten um eine zu den Umlenkrollen des Förderbandes senkrechte Achse aus.

Der Erfindung liegt somit die Aufgabe zugrunde, einen Bandförderer für ein Fahrzeug der eingangs geschilderten Art so auszugestalten, daß eine vergleichsweise leichte, wenig aufwendige Konstruktion erreicht wird, ohne auf eine Anpassung des Bandförderers an die jeweils geforderte Förderstrecke verzichten zu müssen. Außerdem sollen die Abwurfbedingungen vom Bandförderer verbessert werden.

Die Erfindung löst die gestellte Aufgabe dadurch, daß der Bandantrieb der Umlenkrolle am fahrzeugseitigen Aufgabeende des Bandförderers zugeordnet ist und daß die beiden mit einer Federkraft im Sinne eines Auseinanderschiebens beaufschlagten Teile des in seiner Länge veränderbaren Tragarmabschnittes die Spanneinrichtung bilden.

Da zufolge dieser Maßnahmen der Bandantrieb der Umlenkrolle des Förderbandes am fahrzeugseitigen Aufgabeende des Bandförderers zugeordnet wird, entfällt die sonst durch den Bandantrieb bedingte Mehrbelastung des abwurfseitigen Tragarmabschnittes. Damit wird nicht nur der Tragarm im Bereich des Abwurfendes entlastet, sondern auch eine hinsichtlich ihres Durchmessers kleinere Umlenkrolle für das Förderband möglich, was bei einer vorgegebenen Fördergeschwindigkeit höhere Drehzahlen für die Umlenkrolle und damit größere, das Abschleudern des Schüttgutes vom Förderband unterstützende Fliehkräfte bedingt. Die Verlagerung des Bandantriebes zur aufgabeseitigen Umlenkrolle des Förderbandes erfordert allerdings zusätzliche Maßnahmen, um einen Schlupf zwischen dem Förderband und der angetriebenen Umlenkrolle zu vermeiden. Zu diesem Zweck muß auf das Förderband eine entsprechende Spannkraft ausgeübt werden. Dies wird durch zwei gegeneinander axial verschiebbare Teile eines Tragarmabschnittes erreicht, wenn die beiden Teile dieses Tragarmabschnittes mit einer Federkraft im Sinne eines Auseinanderschiebens beaufschlagt werden. Durch diese Maßnahme wird das Förderband nicht nur in einer vorgegebenen Strecklage des gelenkig unterteilten Tragarmes, sondern auch in beliebigen gegenseitigen Schwenkverstellungen der Tragarmabschnitte zueinander unter einer entsprechenden Zugspannung gehalten, weil über die gegeneinander verschiebbaren Teile des in seiner Länge veränderbaren Tragarmabschnittes die sich mit einem Verschwenken der Tragarmabschnitte ändernde Führungslänge des Förderbandes zwischen den Führungs- und Umlenkrollen an die vorgegebene Länge des Förderbandes angeglichen wird. Das Schüttgut kann daher auch in zueinander geneigten Zwischenstellungen der Tragarmabschnitte gefördert werden, so daß es zur Anpassung des Bandförderers an die jeweils geforderte Förderstrecke nicht einer Längenänderung des Bandförderers bedarf. Durch eine entsprechende gegenseitige Verschwenkung der Tragarmabschnitte läßt sich das Abwurfende des Bandförderers ohne weiteres gegenüber der zu beliefernden Stelle ausrichten. Wird der abwurfseitige Tragarmabschnitt abgeschwenkt, so wird selbst eine Verkürzung der Förderstrecke auf die verbleibenden Tragarmabschnitte möglich.

Um in einfacher Weise für das Förderband die erforderliche Spannkraft über den benötigten Längenausgleich sicherstellen zu können, können die beiden Teile des in seiner Länge veränderbaren Tragarmabschnittes aus zwei ineinander geführten Rohrstücken bestehen, in die eine Druckfeder beispielsweise in Form einer Schraubenfeder eingesetzt ist.

Die durch die Verlagerung des Bandantriebes zum Aufgabeende des Bandförderers bedingte leichte Konstruktion erlaubt außerdem im Zusammenwirken mit der vorgesehenen Spanneinrichtung für das Förderband eine vorteilhafte Schwenkantriebanordnung, in dem die die Schwenkantriebe bildenden Schwenkzylinder zwischen dem rücklaufenden Trum des Förderbandes und dessen Fördertrum vorgesehen werden können. Die Führung des rücklaufenden Förderbandtrumes unterhalb dieser Schwenkzylinder vermeidet in vorteilhafter Weise eine Verschmutzung der Schwenkzylinder durch vom rücklaufenden Förderbandtrum abfallende Schüttgutreste.

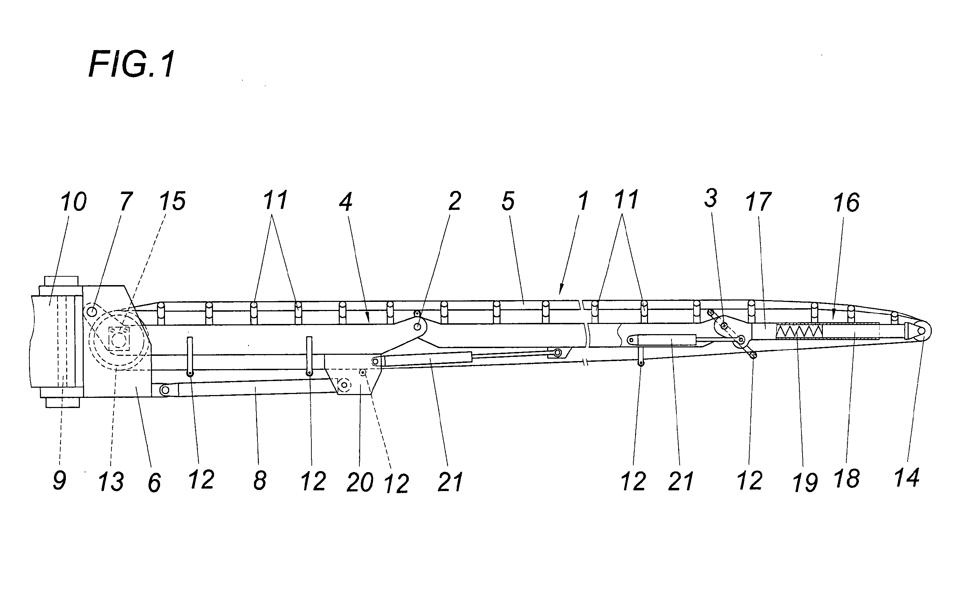

In der Zeichnung ist der Erfingungsgegenstand beispielsweise dargestellt. Es zeigen
- Fig. 1: einen erfindungsgemäßen Bandförderer für ein Fahrzeug in einer gestreckten Arbeitsstellung in einer zum Teil aufgerissenen Seitenansicht und

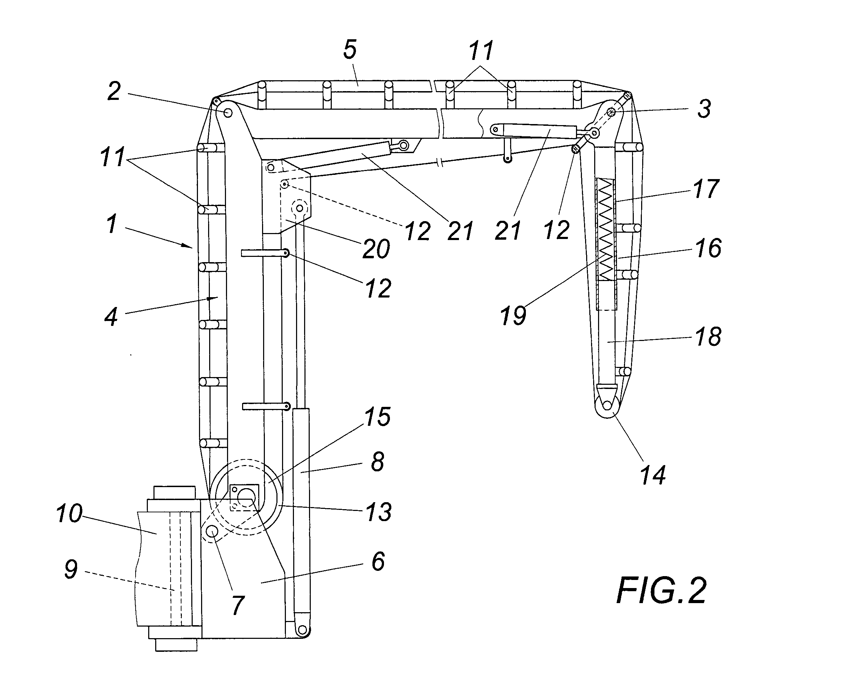

- Fig. 2: diesen Bandförderer in einer eingeschwenkten Ruhestellung in einem größeren Maßstab.

Der Bandförderer 1 gemäß dem dargestellten Ausführungsbeispiel weist einen durch zwei Gelenke 2 und 3 unterteilten Tragarm 4 für ein endlos umlaufendes Förderband 5 auf. Dieser Tragarm 4 ist in einem Gestell 6 um eine horizontale Achse 7 schwenkbar gelagert und kann mit Hilfe eines Schwenkzylinders 8 um die Achse 7 verschwenkt werden. Das Gestell 6 selbst ist um eine vertikale Achse 9 drehbar in einem Rahmen 10 am Heck eines nicht dargestellten Fahrzeuges gehalten.

Das Förderband 5 wird entlang des Tragarmes 4 durch Führungsrollen 11 für das Fördertrum und durch Führungsrollen 12 für das rücklaufende Trum abgestützt und im Bereich des Aufgabeendes und des Abwurfendes über Umlenkrollen 13, 14 geführt. Im Gegensatz zu herkömmlichen Bandförderern dieser Art ist der Bandantrieb 15 nicht der abwurfseitigen Umlenkrolle 14, sondern der Umlenkrolle 13 am fahrzeugseitigen Aufgabeende des Bandförderers 1 vorgesehen. Dieser Bandantrieb 15 besteht in vorteilhafter Weise aus einem in die Umlenkrolle 13 eingebauten Hydraulikmotor.

Damit das Förderband 5 mit einer ausreichenden Zugspannung um die angetriebene Umlenkrolle 13 am Aufgabeende des Bandförderers 1 geführt werden kann, besteht der abwurfseitige Abschnitt 16 des Tragarmes 1 aus zwei gegeneinander axial verschiebbaren Teilen 17, 18, vorzugsweise in Form von zwei teleskopisch ineinander geführten Rohrstücken, in die eine als Schraubenfeder ausgebildete Druckfeder 19 eingesetzt ist. Die beiden axial gegeneinander verschiebbar gelagerten Teile 17, 18 des Tragarmabschnittes 16 bilden somit zusammen mit der Federbeaufschlagung eine Spanneinrichtung für das Förderband 5, so daß über die angetriebene Umlenkrolle 13 im Bereich des Aufgabeendes eine entsprechende Zugkraft auf das rücklaufende Trum des Förderbandes 5 zur Schüttgutförderung aufgebracht werden kann. Die Spanneinrichtung wirkt jedoch nicht nur in einer durch eine Strecklage des Tragarmes 4 bestimmten Arbeitsstellung, sondern auch in beliebigen Schwenkstellungen der einzelnen durch die gelenkige Unterteilung des Tragarmes 4 erhaltenen Tragarmabschnitte, was die Möglichkeit eröffnet, auch in solchen Zwischenstellungen Schüttgut zu fördern.

Die Verlagerung des Bandantriebes 15 in den Bereich des Aufgabeendes des Bandförderers 1 bringt nicht nur eine vorteilhafte Entlastung des abwurfseitigen Tragarmabschnittes 16 mit sich, sondern erlaubt auch eine Ausbildung der abwurfseitigen Umlenkrolle 14 mit einem entsprechend kleineren Durchmesser, was im Bereich der Umlenkrolle 14 größere Fliehkräfte auf das Schüttgut nach sich zieht, wodurch das fliehkraftbedingte Abschleudern des Schüttgutes unterstützt wird.

Während der Schwenkzylinder 8 zum Verschwenken des Tragarmes 4 um die Anlenkachse 7 im Gestell 6 unterhalb des rücklaufenden Fördertrums des Förderbandes 5 angeordnet ist, was einen das rücklaufende Bandtrum umfassenden Anlenkbügel 20 für den Schwenkzylinder 8 bedingt, sind die Schwenkantriebe 21 im Bereich der Gelenke 2 und 3, im allgemeinen ebenfalls Schwenkzylinder, zwischen den beiden Trumen des Förderbandes 5 angeordnet, so daß das rücklaufende Trum unterhalb dieser Schwenkantriebe 21 verläuft. Damit ist eine Verschmutzung der Schwenkantriebe 21 zwischen den gelenkig miteinander verbundenen Tragarmabschnitten durch vom rücklaufenden Bandtrum abfallende Schüttgutreste ausgeschlossen.

Es braucht wohl nicht besonders hervorgehoben zu werden, daß die Erfindung nicht auf das dargestellte Ausführungsbeispiel beschränkt ist, weil es vor allem darum geht, den Bandantrieb 15 in den Bereich der aufgabeseitigen Umlenkrolle 13 zu verlegen und einen der Tragarmabschnitte als Spanneinrichtung für das Förderband 5 mit zwei gegeneinander axial verschiebbaren und mit einer Federkraft beaufschlagten Teilen 17, 18 auszubilden. Obwohl sich hiefür der abwurfseitige Abschnitt 16 des Tragarmes 4 gut eignet, kann unter Umständen auch ein anderer Tragarmabschnitt als Spanneinrichtung ausgebildet werden.

## Patentansprüche

1. Bandförderer (1) für ein Fahrzeug mit einem Tragarm (4), der Führungsrollen (11, 12) für ein um endseitige Umlenkrollen (13, 14) umlaufendes Förderband (5) aufweist und durch wenigstens zwei Gelenke (2) mit zu den Umlenkrollen (13, 14) parallelen Achsen in gegeneinander durch Schwenkantriebe (21) verschwenkbare Abschnitte unterteilt ist, von denen einer zur Längenänderung aus zwei gegeneinander axial verschiebbaren Teilen (17, 18) besteht, mit einem einer Umlenkrolle (13) an einem Ende des Bandförderers (1) zugeordneten Bandantrieb (15) und mit einer Spanneinrichtung für das Förderband (5), **dadurch gekennzeichnet, daß** der Bandantrieb (15) der Umlenkrolle (13) am fahrzeugseitigen Aufgabeende des Bandförderers (1) zugeordnet ist und daß die beiden mit einer Federkraft im Sinne eines Auseinanderschiebens beaufschlagten Teile (17, 18) des in seiner Länge veränderbaren Tragarmabschnittes (16) die Spanneinrichtung bilden.

2. Bandförderer nach Anspruch 1, **dadurch gekennzeichnet, daß** die beiden Teile (17, 18) des in seiner Länge veränderbaren Tragarmabschnittes (16) aus zwei ineinander geführten Rohrstücken bestehen, in die eine Druckfeder (19) eingesetzt ist.

3. Bandförderer nach Anspruch 1 oder 2, **dadurch gekennzeichnet, daß** die Schwenkantriebe (21) aus zwischen dem rücklaufenden Trum des Förderbandes (5) und dessen Fördertrum angeordneten Schwenkzylindern bestehen.
